# EUROPÄISCHE PATENTSCHRIFT

(11) **EP 1 625 361 B1**
(45) Veröffentlichungstag und Bekanntmachung des Hinweises auf die Patenterteilung: **11.04.2007**
(21) Anmeldenummer: 04741482.6
(22) Anmeldetag: 26.04.2004
(51) Int. Cl.: G01D 13/00, F16H 27/02

(54) **INKREMENTELLER ANTRIEB**
INCREMENTAL DRIVE
COMMANDE INCREMENTALE

(30) Priorität: 19.05.2003 DE 10322835; 09.02.2004 DE 102004006290
(43) Veröffentlichungstag der Anmeldung: 15.02.2006
(73) Patentinhaber: SIEMENS AKTIENGESELLSCHAFT, 80333 München (DE)
(72) Erfinder: ADAMS, Jürgen, 78052 Villingen-Schwenningen (DE)
(86) Internationale Anmeldenummer: PCT/EP2004/050609
(87) Internationale Veröffentlichungsnummer: WO 2004/102126

(56) Entgegenhaltungen:
- DE-A- 10 126 712
- FR-A- 1 326 123
- GB-A- 1 128 732
- US-A- 3 965 775
- US-A- 4 229 984
- US-A- 4 771 646

## Beschreibung

Die vorliegende Erfindung betrifft einen inkrementellen Antrieb, insbesondere für ein analoges Zeigerinstrument eines Kraftfahrzeuges, mit einer drehbaren Achse, wobei der Antrieb einen elektromechanisch bewegten Kulissenantrieb aufweist, mittels dessen die Achse angetrieben wird und sich so ein Kulissenelement bewegt, das entlang einer Vorschubrichtung bewegbar gelagert ist, wobei das Kulissenelement beschränkt auf einen translatorischen Freiheisgrad beweglich zwischen zwei Stellungen zusätzlich gelagert ist und sich zwischen einer ersten Stellung und einer zweiten Stellung hin- und herbewegen kann. Daneben betrifft die Erfindung ein Verfahren zum Betrieb eines inkrementellen Antriebes der vorgenannten Art.

In modernen Kraftfahrzeugen sind üblicherweise in einem Armaturenbrett verschiedenste Zeigerinstrumente integriert, die einem Fahrer eine Vielzahl von Informationen, wie beispielsweise Geschwindigkeit des Fahrzeugs, Drehzahl des Motors oder Tankfüllgrad signalisieren. Aus Gründen der Verkehrssicherheit müssen diese Instrumente im ständigen Blickfeld des Fahrers angeordnet sein, wodurch der zur Verfügung stehende Einbauraum im Armaturenbrett oftmals stark eingegrenzt bzw. nicht ausreichend ist.

Zeigerinstrumente weisen in der Regel Motoren beziehungsweise Drehspulen- oder Dreheisen-Antriebe sowie Kreuzspul-Antriebe auf. Als Motoren kommen sowohl Gleichstrom-Motoren als auch Schrittmotoren zum Einsatz. Beide Motorenarten weisen Untersetzungsgetriebe auf, so dass sich eine Position eines Zeigers in kleinsten Schritten bzw. Winkeln verändern lässt.

Mittels über digitale Schaltungen angesteuerte Schrittmotoren werden die Zeiger kontrolliert und ohne Abgleich an die einem Messwert entsprechende Position eines Zifferblattes bewegt. Gebräuchliche Zeigerantriebe sind in der Regel so konzipiert, dass für alle Anwendungen eine ausreichende Verstell- bzw. Anzeigedynamik erreicht werden kann. Die hierfür konzipierten Antriebe werden aus fertigungstechnischen Gründen auch für Zeigerinstrumente mit geringer Anzeigedynamik verwendet. Anzeigeinstrumente mit geringer bis sehr geringer Anzeigedynamik sind bekannter Weise zum Beispiel die Anzeigen für den Tankfüllstand oder die Öltemperatur. Nachteilig bei den oben aufgeführten Zeigerinstrumenten ist der im Verhältnis zur Zeigerfahne eines Zeigers benötigte große Bauraum zur Unterbringung des Antriebs bzw. des Motors. Weiterhin sind hohe Herstellungskosten aufgrund einer großen Anzahl an Bauteilen und erhöhtem Montageaufwand nachteilig.

Aus der britischen Patentschrift GB-A-1 128 732, den US-Patenten 4,229,984; 4,771,646 und 3,965,775, der französischen Patentanmeldung FR-A-1.326.123 sind bereits inkrementelle Antriebe der vorgenannten Art bekannt. Diese Anordnungen haben jedoch den Nachteil, dass nur eine Vorschubrichtung mit dem definierten Bewegungsinkrement antreibbar ist.

Aufgabe der vorliegenden Erfindung ist es, einen inkrementellen Antrieb vorzusehen, der einen reduzierten Bauraum bei gleichzeitiger Vereinfachung des Aufbaus und Reduzierung des Fertigungsaufwands benötigt.

Die Aufgabe wird erfindungsgemäß durch einen inkrementellen Antrieb der eingangs genannten Art gelöst, welcher die Merkmale des Anspruchs 1 aufweist. Daneben wird zur Lösung der Aufgabe erfindungsgemäß ein Verfahren nach Anspruch 34 vorgeschlagen. Die Unteransprüche beinhalten jeweils vorteilhafte Weiterbildungen der Erfindung.

Der inkrementelle Antrieb weist den Vorteil auf, dass er einen sehr kompakten Aufbau ermöglicht und beim Einbau beispielsweise in ein Armaturenbrett eines Kraftfahrzeugs ein sehr geringes Raumvolumen benötigt.

Als besonders vorteilhaft erweist sich der Kulissenantrieb, der ein axial angeordnetes Kulissenrad, welches beispielsweise über am Kulissenrad angeordnete Zapfen in einer Kulisse auf- oder abwärts geführt wird, aufweist und durch eine vertikale, in Achsrichtung verlaufende Hubbewegung auf- und abwärts bewegt wird. Die Hubbewegung wird über einen gepolten Strom durch einen Elektromagneten in Verbindung mit einem an der Achse angeordneten Permanentmagneten erzielt, so dass ein vorteilhaft an der Achse angeordnetes Zeigemittel in Abhängigkeit der Hubrichtung rechts- oder linksdrehend um einen definierten Winkelschritt verstellt wird. Die Größe des Winkelschrittes ist abhängig von der Konstruktion des Kulissenantriebs und ermöglicht die Abbildung von groben bis feinen Rasterstrukturen auf einem Ziffernblatt.

Dadurch, dass der Antrieb digital ansteuerbar ist, kann das Zeigermittel in vorteilhafter Weise schrittweise an die dem Messwert einer Schaltungsanordnung entsprechende analoge Position auf dem Ziffernblatt gebracht werden.

Vorteilhaft ist es weiterhin, dass axial, ober- und unterhalb des Permanentmagneten elastische Elemente angeordnet sind, in die der Permanentmagnet eingespannt ist. In Abhängigkeit einer Stromrichtung eines dem Elektromagneten zugeführten Stroms wird der Permanentmagnet angezogen oder abgestoßen. In beiden Fällen werden die elastischen Elemente jeweils gegenläufig entlastet und belastet. Im stromlosen Zustand des Elektromagneten ist der Permanentmagnet dergestalt in den elastischen Elementen eingespannt, dass er eine Neutralstellung einnimmt und eine axiale Ausrichtung des Zeigemittels bewirkt. In diesem Zustand stehen die Zapfen des Kulissenrads mit der Kulisse nicht im Eingriff. Der Permanentmagnet ist weiterhin in den elastischen Elementen dergestalt eingespannt, dass eine durch eine Reibung verursachte Hemmung durch Stöße an das Zeigerinstrument verursachte Fehlschritte verhindert.

In vorteilhafter Weise kann mittels in Achslagerungen vorgesehenem viskosen Dämpfungsgel die Schrittbewegung des Zeigemittels so gedämpft werden, dass eventuell auftretende Sprungbewegungen des Zeigemittels nicht sichtbar sind.

Eine besonders günstige Ausführungsform der Erfindung ist dadurch gegeben, dass die Achse aus transparentem lichtleitendem Material hergestellt ist. Über eine auf einer Leiterplatte angeordnete Lichtquelle kann Licht in die Achse eingekoppelt werden, so dass ein an der Achse angeordnetes Ziffernblatt als auch das Zeigemittel beleuchtet werden können.

Eine vorteilhafte Weiterbildung des inkrementellen Antriebes sieht vor, dass der Kulissenantrieb eine ortsfeste Führungskulisse und ein bewegliches Kulissenelement aufweist, das Kulissenelement ein erstes Führungselement aufweist, welches Führungselement mit der Führungskulisse zumindest zeitweise im Eingriff steht, wobei das Kulissenelement mit einer Antriebskraft beaufschlagt wird, so dass sich das Kulissenelement in Richtung der Antriebskraft bewegt und gleichzeitig die Führungskulisse das Kulissenelement mittels des Führungselementes auf Grund der Bewegung in Richtung der Antriebskraft in eine Vorschubrichtung führt. Ein besonderer Vorteil dieser Anordnung liegt in der wiederholbar präzisen Positionierung des Kulissenelementes, dessen Position eindeutig durch die ortsfeste Führungskulisse bestimmt ist. Das Kulissenelement bewegt sich hierbei vorzugsweise rotatorisch, so dass die Vorschubrichtung eine Drehrichtung des Kulissenelementes ist. Das Kulissenelement weist zweckmäßig eine in Richtung der Antriebskraft gerichtete translatorische Bewegungsfreiheit auf, so dass die Translation des Kulissenelementes eine Drehung desselben in Abhängigkeit von der Position des Führungselementes in der Führungskulisse vollzieht. Je nach Ausgestaltung der Führungskulisse und des Führungselementes kann das Kulissenelement gleichsam in einer bestimmten Position verriegelt werden und ist auf diese Weise gegen ein ungewolltes Verstellen in Folge von Erschütterungen gesichert.

Eine besonders vorteilhafte Ausbildung der Führungskulisse sieht vor, dass schräg zur Vorschubrichtung orientierte Gleitführungen vorgesehen sind, die mit dem Führungselement zusammenwirken. Die Schräge der Gleitführungen verhindert eine Bewegung des Kulissenelementes in Vorschubrichtung, ohne dass sich das Kulissenelement in Richtung der Antriebskraft bewegt, da dass Führungselement an der jeweiligen Gleitführung anliegt.

Zweckmäßig wird die Größe eines Bewegungsinkrements des Antriebes durch die Ausdehnung einer Gleitführung in Vorschubrichtung beziehungsweise Umfangsrichtung definiert. Sinnvoll ist es hierbei, einzelne erste Gleitführungen und einzelne zweite Gleitführungen jeweils abwechselnd in Vorschubrichtung anzuordnen. Für einen reibungsarmen und hemmungsfreien Ablauf ist es zweckmäßig, wenn die ersten Gleitführungen mit der Vorschubrichtung einen stumpfen Winkel zwischen 20° und 70° einschließen, die zweiten Gleitführungen mit der Vorschubrichtung einen stumpfen Winkel zwischen 20° und 70° einschließen und die ersten Gleitführungen mit den zweiten Gleitführungen einen stumpfen Winkel zwischen 20° und 70° einschließen. Beste Ergebnisse werden erzielt bei Winkeln zwischen 40° und 50°, besonders, wenn eine Bewegung des inkrementellen Antriebes in und entgegen der Vorschubrichtung vorgesehen ist.

Besonders, wenn das Führungselement als zylindrischer Stift mit einer als Gleitführung arbeitenden Mantelfläche des Zylinders ausgebildet ist, ist ein Abstand benachbarter Gleitführungen in Vorschubrichtung sinnvoll, der geringer ist als der Radius der Zylinderform des Führungselementes. Ein störungsfreier Ablauf ist sichergestellt, wenn erste und zweite Gleitführungen in Vorschubrichtung direkt aneinander angrenzend oder sogar mit einem Überlappungsbereich angeordnet sind. Eine ebene Gestaltung der Gleitführungen hat sich als konstruktiv einfache Lösung bewährt. Dient der erfindungsgemäße Antrieb zum Vorschub des Zeigers eines Zeigerinstrumentes, kann das Kulissenelement mit dem Zeiger ein Bauteil bilden oder selbst als Zeiger ausgebildet sein.

Mit Vorteil erstreckt sich die Führungskulisse entlang eines Kreissegmentes, dreht sich das Kulissenelement um eine in Richtung der Achse verlaufende Drehachse, ist der geometrische Mittelpunkt des Kreissegmentes Bestandteil der Drehachse, sind Gleitführungen der Führungskulisse schräg zur Umfangsrichtung orientiert und eine das Kulissenelement bewegende Antriebskraft zur Drehachse radial orientiert. In erster Näherung ist damit die tangential orientierte Vorschubrichtung im Rahmen eines Bewegungsinkrementes senkrecht zu der das Kulissenelement bewegenden Antriebskraft orientiert, was bewirkt, dass die Präzision der Winkelposition des Kulissenelementes nahezu unabhängig von der Höhe der Antriebskraft ist. Auch das Behaarungsvermögen des Kulissenelementes bei mechanischen Störeinflüssen, wie zum Beispiel Schwingungen, ist hierbei unabhängig von der Antriebskraft.

Mit Vorteil ist das entlang einer Vorschubrichtung bewegbar gelagerte Kulissenelement beschränkt auf einen translatorischen Freiheitsgrad beweglich zwischen zwei Stellungen zusätzlich gelagert und kann sich zwischen einer ersten Stellung und einer zweiten Stellung hin und her bewegen, wobei für den Fall, dass eine Richtungsumkehr des inkrementellen Antriebes gewünscht ist, vorzugsweise zwischen der ersten Stellung und der zweiten Stellung des Kulissenelementes eine neutrale Stellung vorgesehen werden kann. Das Kulissenelement kann in direkter Verbindung mit einem Magneten, insbesondere einem Permanentmagneten, stehen und im Zusammenwirken mit einer ansteuerbaren Spule und gegebenenfalls einem die Neutralstellung zentrierenden elastischen Element zwischen der ersten und der zweiten Stellung beziehungsweise der ersten Stellung, der neutralen Stellung und der zweiten Stellung translatorisch hin und her bewegt werden. Eine besonders vorteilhafte Lösung des Beaufschlagens des Kulissenelementes mit der Antriebskraft sieht vor, ein Übertragungselement zwischen einer ersten Position und einer zweiten Position hin und her beweglich zu lagern, das Übertragungselement mit dem Kulissenelement in der Weise zusammenwirken zu lassen, dass eine Bewegung des Übertragungselementes in die erste Position eine Bewegung des Kulissenelementes in eine erste Stellung bewirkt und ein Bewegen des Übertragungselementes in die zweite Position eine Bewegung des Kulissenelementes in eine zweite Stellung bewirkt. Zusätzlich kann das Übertragungselement noch die Zentrierung des Kulissenelementes in eine neutrale Position, gegebenenfalls unter Zuhilfenahme eines elastischen Elementes, vorsehen. Das Übertragungselement ist dabei vorzugsweise drehbar gelagert und kippt zwischen einer ersten Position und einer zweiten Position, gegebenenfalls unter Zwischenschaltung einer neutralen Position hin und her.

Ist eine Richtungsumkehr des inkrementellen Antriebes gewünscht, ist es zweckmäßig, wenn das Kulissenelement neben dem ersten Führungselement ein zweites Führungselement aufweist. Bevorzugt stehen diese jeweils abwechselnd mit der Führungskulisse in Eingriff. Hierbei kommt es zwischen ersten Gleitführungen der Führungskulisse und dem ersten Führungselement abwechselnd mit zweiten Gleitführungen und zweiten Führungselementen zur Anlage. Ausgehend von der neutralen Position des Übertragungselementes beziehungsweise der neutralen Stellung des Kulissenelementes hängt es von der anfänglichen Bewegung des Kulissenelementes in die erste oder die zweite Stellung ab, ob sich der inkrementelle Antrieb in oder entgegen der Vorschubrichtung bewegt.

Weitere vorteilhafte Ausgestaltungen sind in den Unteransprüchen angegeben.

Die in den Unteransprüchen angegebenen vorteilhaften Ausgestaltungen der Erfindung können gemäß der Erfindung in beliebiger Zusammenstellung auch vorteilhaft miteinander kombiniert werden.

Ausführungsbeispiele der Erfindung werden anhand der nachfolgenden Figuren näher erläutert. Es zeigen:
- Figur 1: eine schematische Schnittdarstellung eines Zeigerinstrumentes mit einem erfindungsgemäßen Antrieb,
- Figur 2: eine detaillierte Schnittdarstellung des in Figur 1 dargestellten Antriebs,
- Figur 3: eine schematische Teilansicht auf die Stirnseite eines in eine Kulisse eingreifenden Kulissenrades,
- Figur 4: eine Teilansicht einer Draufsicht auf die Kulisse und das Kulissenrad der Figur 2,
- Figur 5a bis 5i: Phasenbilder von Drehbewegungen des Kulissenrads in der Kulisse.
- Figur 6: eine schematische Darstellung einer Draufsicht auf ein erfindungsgemäßes Zeigerinstrument,
- Figur 7: eine schematische Schnittdarstellung des Zeigerinstrumentes der Figur 6,
- Figur 8: eine schematische Darstellung der Funktionsweise der Antriebsanordnung des inkrementellen Antriebes in einem Längsschnitt eines Zeigerinstrumentes und
- Figur 9: eine schematische Darstellung des Zusammenwirkens der Führungskulisse mit den Führungselementen eines Kulissenelementes in verschiedenen Bewegungsphasen (9a - 9f).

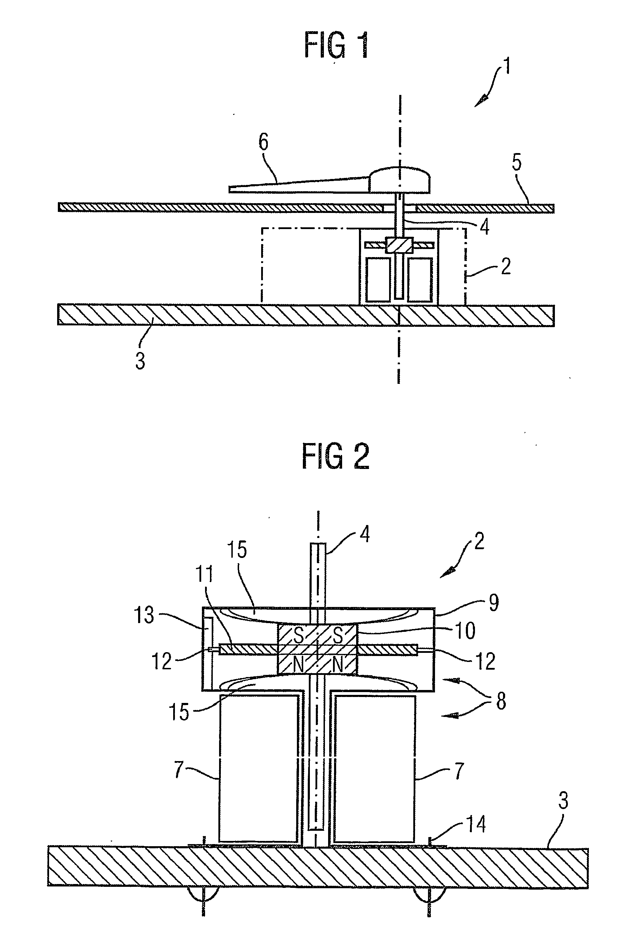

Die Figur 1 zeigt eine Schnittdarstellung eines zeigerinstrumentes 1 mit einem erfindungsgemäßen inkrementellen Antrieb 2. Das Zeigerinstrument 1 ist auf einer Leiterplatte 3 angeordnet, die hier nicht gezeigte Schaltungsanordnungen aufweist, die das Zeigerinstrument 1 mit Spannung bzw. gepolten Strömen versorgen und eine Übertragung der Messwerte an das analoge Zeigerinstrument 1 bewirken. An einer Achse 4 sind koaxial der Antrieb 2, ein Ziffernblatt 5 und ein Zeigemittel 6, beispielsweise ein zeiger, angeordnet. Über den Antrieb 2 kann das Zeigemittel 6 in einem möglichen Verdrehwinkel von 0° bis 360° in beliebigen Winkelschritten zur Anzeige von auf dem Ziffernblatt 5 abgebildeten Analogwerten verdreht werden.

In der Figur 2 ist eine Schnittdarstellung des detaillierten Aufbaus des in der Figur 1 dargestellten Antriebs 2 dargestellt. Oberhalb der Leiterplatte 3 sind axial an der Achse 4 Spulen 7 eines Elektromagneten 8 angeordnet. Der Elektromagnet 8 weist einen Spulenkörper 9 auf, der einen axial angeordneten Permanentmagneten 10 umschließt. Pol und Gegenpol des Permanentmagneten 10 sind axial auf seiner Ober- und Unterseite ausgerichtet. Innerhalb des Spulenkörpers 9 ist weiterhin axial ein Kulissenrad 11 angeordnet, dessen äußere Zapfen 12 bei einer Bestromung des Elektromagneten 8 in eine am Spulenkörper 9 ausgebildete Kulisse 13 eingreifen. Zur Bestromung sind am Spulenkörper 9 Anschlussstifte 14 vorgesehen. Das Kulissenrad 11 und die Kulisse 13 stellen einen Kulissenantrieb dar, der durch eine vertikale, in Achsrichtung eines hier nicht gezeigten Zeigers verlaufende Hubbewegung betrieben wird. Ober- und unterhalb des Permanentmagneten 10 sind als Tellerfedern ausgebildete elastische Elemente 15 vorgesehen, die am Spulenkörper 9 anliegen. Der Permanentmagnet 10 ist in den elastischen Elementen 15 eingespannt und nimmt eine mittige Neutralposition ein, von der aus der Permanentmagnet 10 axial auf- und abwärts bewegt werden kann, so dass die angetriebene Achse 4 in zwei Drehrichtungen drehbar ist. Ein von einer hier nicht gezeigten Schaltungsanordnung der Leiterplatte 3 den Anschlussstiften 14 der Spulen 7 des Elektromagneten 8 zugeführter gepolter Strom bewirkt eine abstoßende oder anziehende Kraftausübung auf den Permanentmagneten 10 durch den Elektromagneten 8. Die damit erzeugte Hubbewegung in axialer Richtung bewirkt, dass der in den elastischen Elementen 15 eingespannte Permanentmagnet 10 ein elastisches Element 15 belastet und ein elastisches Element 15 entlastet. In Abhängigkeit der Hubrichtung wird die Achse 4 und damit das Zeigemittel 6 um einen definierten winkelschritt rechts- oder linksdrehend bewegt. Die Größe des Winkelschritts ist abhängig von der Konstruktion des Kulissenantriebs und kann für sehr feine Raststrukturen des Zifferblattes 5 bei Winkelgrößen von 3° und für grobe Raststrukturen bei Winkelgrößen von 8° liegen. Hiermit ergeben sich bei einer Zeigerlänge von beispielsweise 20 mm Länge Bewegungssprünge von ca. 1 mm bis 2,8 mm. Je kürzer eine Zeigerfahne des Zeigers in ihrer Länge ausgeführt ist, desto geringer ist die in Winkelgraden zurückgelegte Schrittweite der Zeigerfahne. Der erfindungsgemäße Antrieb 2 bewirkt somit einen inkrementellen Antrieb für die Achse 4.

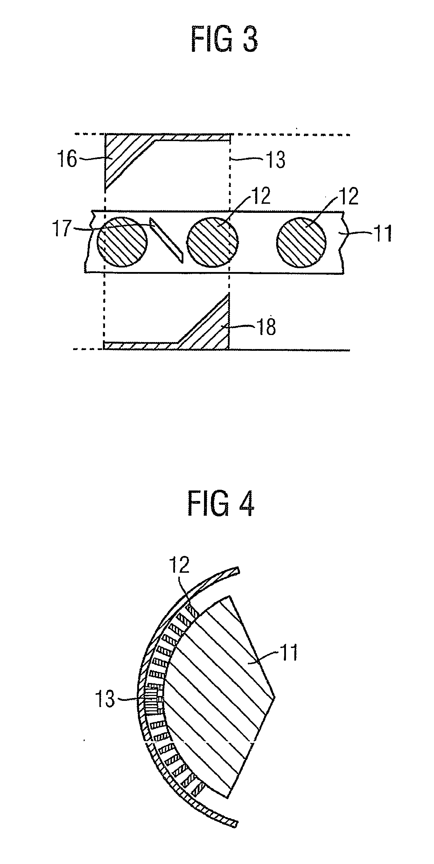

In der Figur 3 ist die schematische Teilansicht auf die Stirnseite des in die Kulisse 13 eingreifenden Kulissenrads 11 dargestellt. Die Zapfen 12 des Kulissenrads 11 sind gleichmäßig beabstandet am Kulissenrad 11 ausgebildet und werden durch ein Oberteil 16, ein Mittelteil 17 und ein Unterteil 18 der Kulisse 13 bewegt. Eine axiale Bewegung des Kulissenrades 11 bewirkt eine Bewegung der im Eingriff mit der Kulisse 13 stehenden Zapfen 12 nach oben oder unten, so dass die zapfen 12 entlang der abgeschrägten Kanten des Ober-16, Mittel- 17 und Unterteils 18 der Kulisse 13 gleiten. Hierdurch wird eine axiale Hubbewegung in eine Drehbewegung des Kulissenrades 11, der Achse 4 und somit eines axial angeordneten Zeigemittels 6 umgesetzt.

Die Figur 4 zeigt einen Ausschnitt einer Draufsicht des Kulissenrades 11 und der Kulisse 13. Der Kulissenantrieb wird mit nur einer Kulisse 13 betrieben. Für eine bessere Kräfteverteilung können auch weitere Kulissen 13 im Bereich des Umfangs des Kulissenrads 11 angeordnet werden.

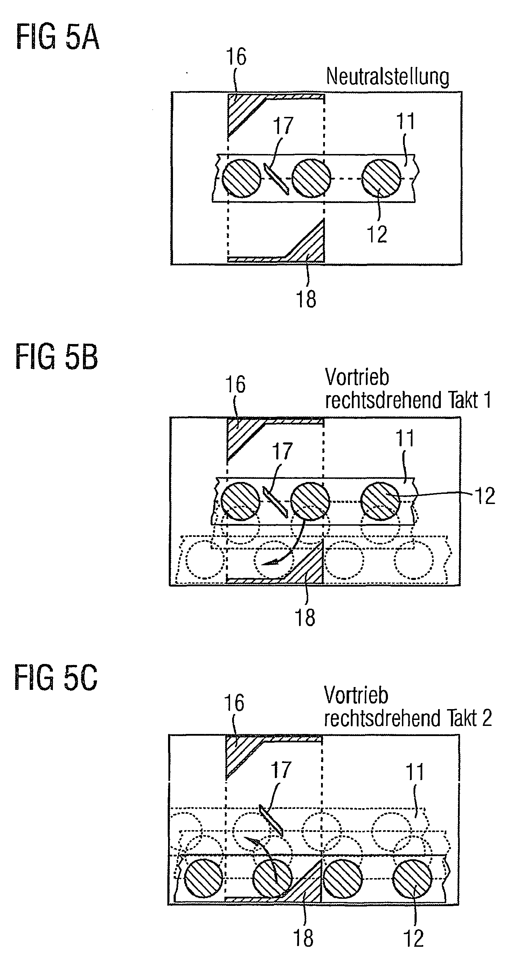

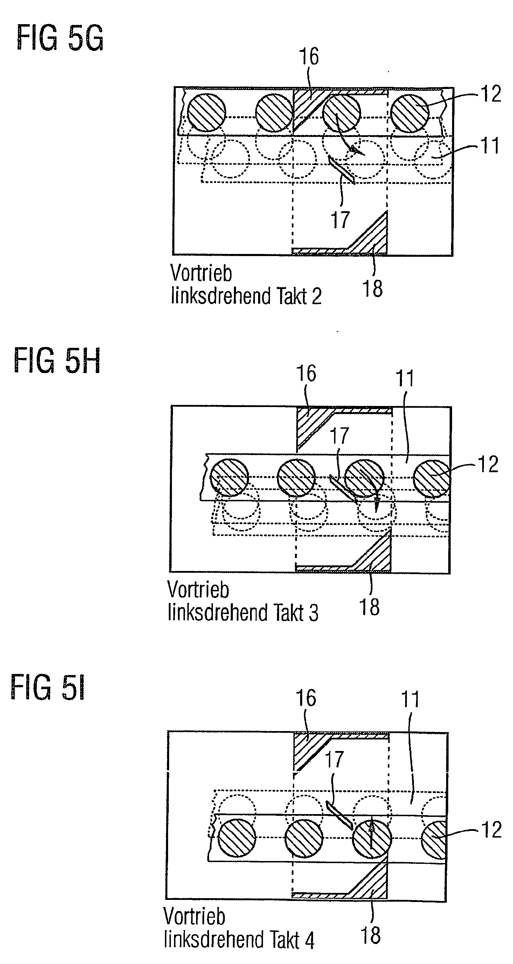

Die Figuren 5a bis 5i verdeutlichen die aufgrund der axialen Hubbewegung erzeugte Drehbewegung des Kulissenrads 11 in der Kulisse 13. Ausgehend von einer in der Figur 5a gezeigten Neutralstellung der Zapfen 12 des Kulissenrads 11 in der Kulisse 13, bei der an den Spulen 7 des Elektromagneten 8 kein Strom anliegt und der Mittelteil 17 der Kulisse 13 in der Waagerechten von zwei benachbarten Zapfen 12 umgeben ist, bewirkt ein in einer entsprechenden Stromstärke und Stromrichtung den Spulen 7 zugeführter Strom, dass der Elektromagnet 8 den Permanentmagneten 10 anzieht (Takt-1). Dies hat zur Folge, dass der Permanentmagnet 10 eine axiale Hubbewegung in Richtung des Unterteils 18 der Kulisse 13, wie in der Figur 5b durch einen Pfeil dargestellt, ausführt. Der Permanentmagnet 10 spannt ein hier nicht gezeigtes, in axialer Hubrichtung am Spulenkörper 9 des Elektromagneten 8 unmittelbar unter dem Permanentmagneten 10 angeordnetes elastisches Element 15. Weiterhin wird ein hier nicht gezeigtes, unmittelbar über dem Permanentmagneten 10 angeordnetes elastisches Element 15 entlastet. Die Zapfen 12 des Kulissenrads 11 werden entsprechend der Form des Unterteils 18 der Kulisse 13, hier schräg abfallend, ausgelenkt. Die Auslenkung bewirkt eine Umsetzung der Hubbewegung in eine rechtsdrehende Drehbewegung der Achse 4 und eines an der Achse 4 angeordneten Zeigemittels 6 um einen definierten Winkel. Eine Abschaltung des Elektromagneten 8 (Takt-2) bewirkt eine Abnahme bzw. einen Abbau eines elektromagnetischen Feldes des Elektromagneten 8 und der Permanentmagnet 10 vollzieht eine Hubbewegung nach oben, wobei die Zapfen 12 des Kulissenrades 11 gegen den Mittelteil 17 der Kulisse 13 geführt werden. Die Zapfen 12 bewegen sich an die am Ende des Pfeils der Figur 5c gezeigte Position, so dass die Zapfen 12 in einer weiteren Drehbewegung ausgelenkt und um einen weiteren Winkelschritt rechtsdrehend bewegt werden. Das unterhalb des Permanentmagneten 10 angeordnete elastische Element 15 wird entlastet, das oberhalb des Permanentmagneten 10 angeordnete elastische Element 15 wird belastet und der Permanentmagnet 10 ist wiederum zwischen beiden elastischen Elementen 15 in seiner Neutralposition eingespannt.

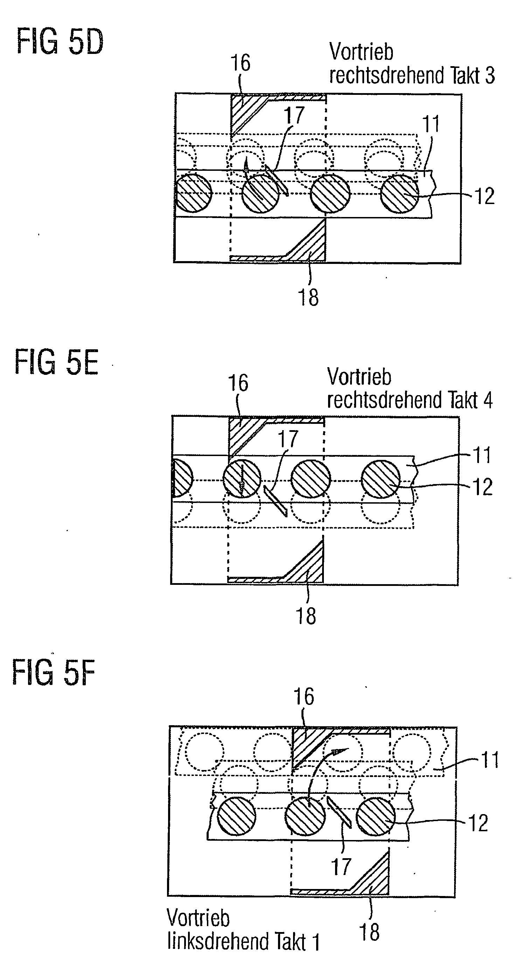

Wird der Elektromagnet 8 in entgegengesetzter Richtung zum Takt-1 bestromt (Takt-3) und der Strom auf ein Drittel des im Takt-1 zugeführten Nennstroms reduziert, gleiten die Zapfen 12 am Mittelteil 17 der Kulisse 13 entlang und erreichen die in der Figur 5d am Ende des Pfeils angedeutete Position. Analog zu obiger Ausführung wird das unmittelbar oberhalb des Permanentmagneten 10 angebrachte elastische Element 15 gespannt. Die Kraftausübung ist dabei so gering, dass die Zapfen 12 den Oberteil 16 der Kulisse 13 nicht erreichen. Wird der Elektromagnet 8 wieder abgeschaltet (Takt-4), wird das elastische Element 15 entlastet, so dass die Zapfen 12, wie in Figur 5e mit dem Pfeil angedeutet, in die Neutralstellung zurückkehren.

Die Figur 5f zeigt eine in Pfeilrichtung ausgeführte Hubbewegung des Permanentmagneten 10 zum Oberteil 16 der Kulisse 13 bei einer dem Takt-1 entgegen gesetzten Bestromung des Elektromagneten 8. In diesem Fall bewirkt die Hubbewegung des Permanentmagneten 10 eine Linksdrehung des auf der Achse 4 angebrachten Zeigemittels 6. Die Abläufe der in den Figuren 5g bis 5i dargestellten Hubbewegung entsprechen der Beschreibung der Figuren 5c bis 5e mit dem Unterschied, dass die Umsetzung der Hubbewegung in eine linksdrehende Drehbewegung des Kulissenrads 11 erfolgt.

In den in der vorliegenden Erfindung aufgeführten Ausführungsbeispielen sind jeweils zwei, den Permanentmagneten 10 einspannende elastische Elemente 15 vorgesehen. Die Erfindung ist jedoch nicht auf diese Ausführungsform beschränkt. Vielmehr kann der Permanentmagnet 10 auch mit einem einzelnen, ober- oder unterhalb des Permanentmagneten 10 angeordneten elastischen Element 15 zusammenwirken. Bei dieser Ausführungsform wird das Kulissenrad 11 über eine entsprechende Bestromung des Elektromagneten 8 gezielt in eine Neutralstellung zurückgebracht.

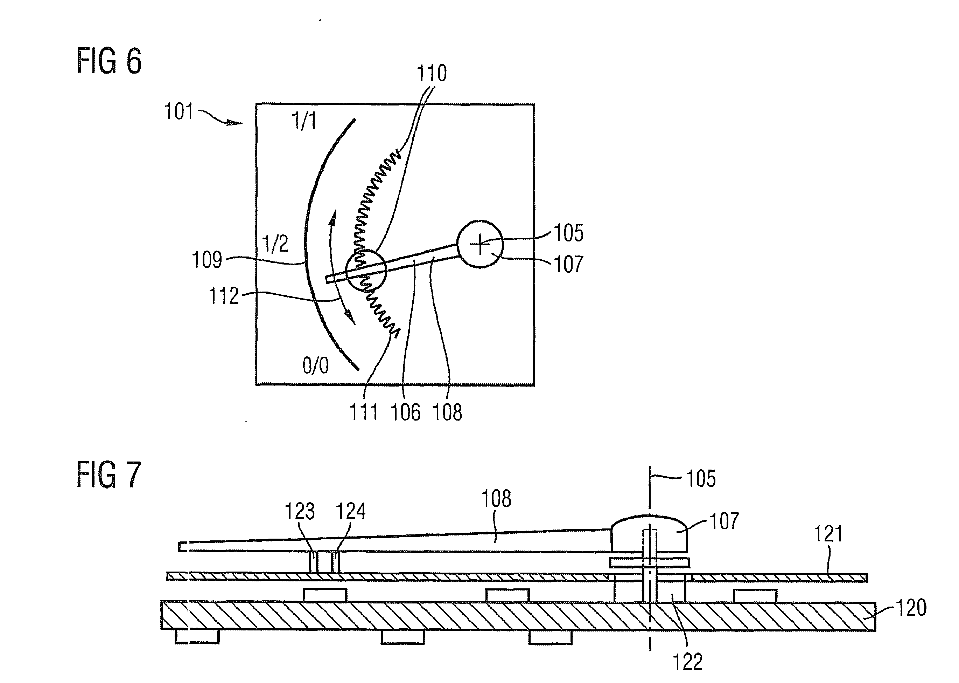

Die Darstellung der Figur 6 zeigt ein Zeigerinstrument 101 erfindungsgemäßer Ausführung mit einem um eine Drehachse 105 drehbaren Zeiger 106, der eine zentrale Abdeckung 107 und eine anzeigende Zeigerfahne 108 aufweist. Die Zeigerfahne 108 weist zur Anzeige auf eine kreissegmentförmige Skalierung 109.

Ein erfindungsgemäßer inkrementeller Antrieb 110 mit einer Führungskulisse 111 und in Figur 6 nicht sichtbaren Führungselementen an der Zeigerfahne 108, die gleichzeitig ein erfindungsgemäßes Kulissenelement 130 verkörpert, treibt die Bewegung des Zeigers 106 in eine Vorschubrichtung 112, welche parallel zur Umfangsrichtung der Bewegung der Zeigerfahne 108 verläuft, an.

Figur 7 zeigt das Zeigerinstrument 101 der Figur 6 in einem Längsschnitt quer durch eine Hauptplatine 120 und ein sich parallel zu der Hauptplatine erstreckendes Zifferblatt 121. Die Hauptplatine 120 ist mit SMD-Bauteilen bestückt, und eine elektromagnetische Spule 122 ist an ihr befestigt und kontaktiert. Senkrecht zu der Hauptplatine 120 und dem Zifferblatt 121 verläuft die Drehachse 105 des Zeigers 106. An der Zeigerfahne 108 erstrecken sich in Richtung des Zifferblattes 121 zwei Führungselemente 123, 124, welche mit der in Figur 6 dargestellten Führungskulisse 111 zusammenwirken.

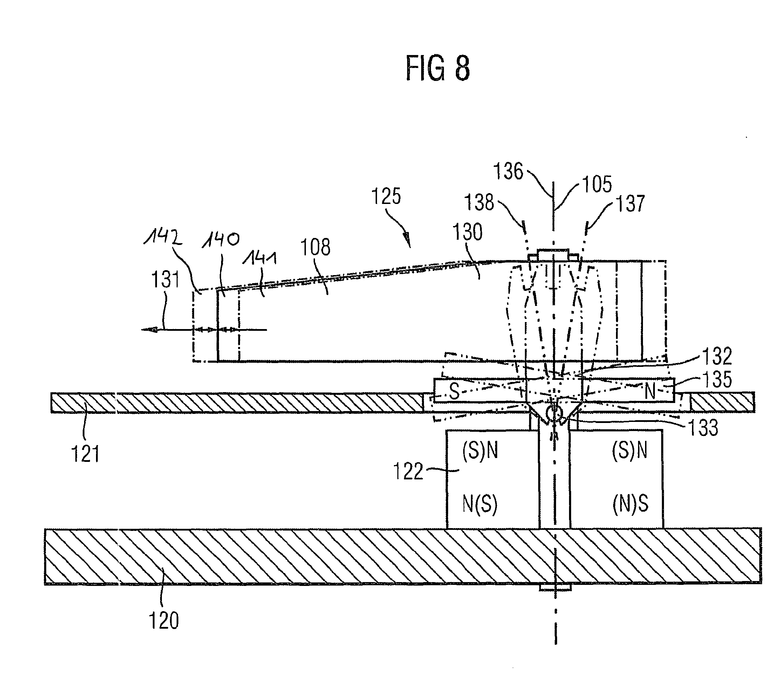

Figur 8 zeigt die Arbeitsweise der Antriebsanordnung 125 des in den Figuren 6 und 7 dargestellten Zeigerinstrumentes 101. Zur Bewegung des Zeigers 106 mittels des erfindungsgemäßen inkrementellen Kulissenantriebes ist eine radial zur Drehachse 105 orientierte Bewegung des gleichzeitig als Kulissenelement 130 ausgebildeten Zeigers 125 erforderlich, damit die in Figur 8 nicht dargestellten Führungselemente 123, 124 in der ebenfalls in Figur 8 nicht dargestellten Führungskulisse 111 für eine Bewegung des Zeigers in oder entgegen der Vorschubrichtung 112 sorgen. Hierzu ist der drehbare Zeiger 108 zusätzlich beschränkt, auf einen translatorischen Freiheitsgrad in Richtung einer radial orientierten Antriebskraft 131 verschieblich gelagert. Je nach Richtung des Vorschubs ist die Antriebskraft 131 positiv oder negativ. Die dargestellte Antriebsanordnung 125 umfasst das Kulissenelement 130, die Spule 122 und ein verschwenkbar gelagertes Übertragungselement 132. Das verschwenkbar gelagerte Übertragungselement 132 ist zwischen einer ersten Position, einer neutralen Position und einer zweiten Position um eine Schwenkachse 133 senkrecht zur Drehachse 105 gelagert. Bestandteil des Übertragungselementes 132 ist ein Permanentmagnet 135 in Stabform. Solange die Spule 122 keine Ansteuerung erfährt, bewirkt ein nicht dargestelltes elastisches Element, dass sich das Übertragungselement 132 in einer neutralen Position 136 zwischen der ersten Position 137 und der zweiten Position 138 befindet. Bei einer Beaufschlagung der Spule 122 mit einer Spannung einer ersten Polarität wechselt das Übertragungselement 132 aus der neutralen Position 136 in eine erste Position 137, da der Permanentmagnet 135 auf Grund seiner Polarität von der magnetisierten Spule 122 angezogen beziehungsweise abgestoßen wird. Nicht dargestellte Mitnehmerelemente an dem als Kulissenelement 130 ausgebildeten Zeiger 106 bewirken eine Bewegung des Kulissenelementes 130 aus einer neutralen Stellung 140 in eine erste Stellung 141 auf Grund der vorbeschriebenen Bewegung des Übertragungselementes 132. In kinematischer Umkehr bewirkt eine Umkehrung der Polarität der Betriebsspannung der Spule 122 eine Bewegung des Kulissenelementes 130 beziehungsweise Zeigers 106 in eine zweite Stellung 142.

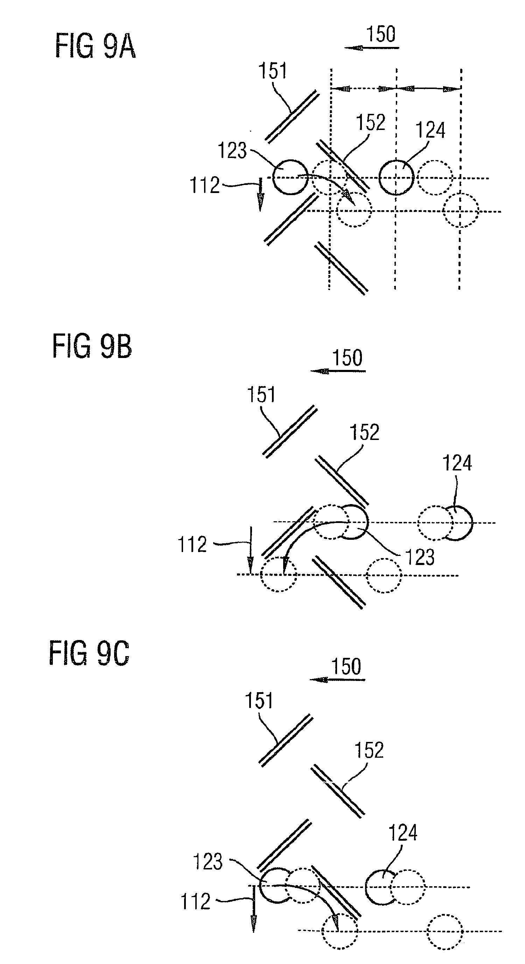

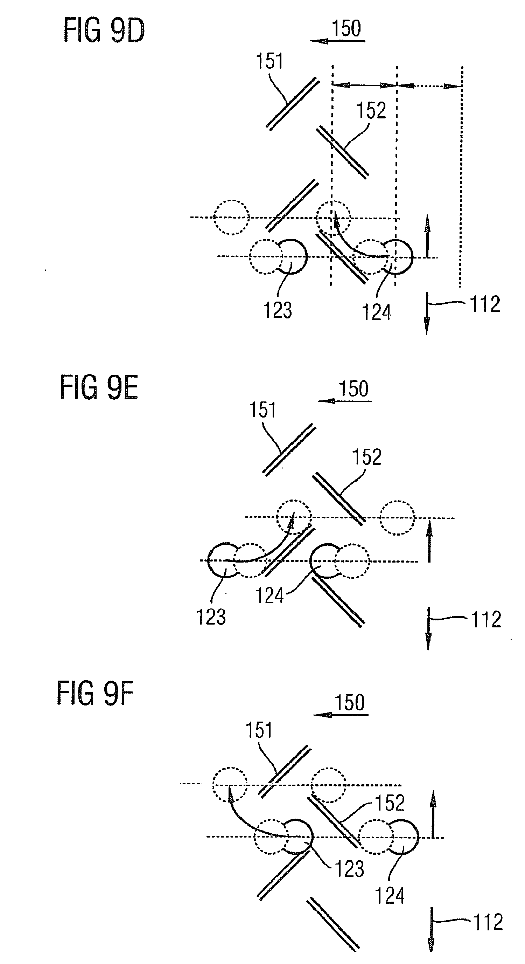

Die Darstellungen der Figur 9a-c zeigen das Zusammenwirken eines ersten Führungselementes 123 und eines zweiten Führungselementes 124 mit der Führungskulisse 111 im Rahmen der Bewegung des inkrementellen Antriebes 110 in Vorschubrichtung 112. Die Figuren 9d-f zeigen entsprechende Darstellungen für eine Bewegung entgegen der Vorschubrichtung 112. In allen Darstellungen ist die Radialrichtung mit 150 beziffert. Die Führungskulisse 111 besteht aus in Vorschubrichtung 112 jeweils abwechselnd angeordneten ersten Gleitführungen 151 und zweite Gleitführungen 152, an denen in den verschiedenen Bewegungsphasen des Antriebs 110 die zylindrisch ausgebildeten Führungselemente 123, 124 an Gleitführungen entlang gleiten. Für eine Bewegung in Vorschubrichtung bewegt sich das nicht dargestellte Kulissenelement 130 mit den beiden Führungselementen 123, 124 zunächst entgegen der Radialrichtung 150 und wirkt mit der Gleitführung 152 in der Weise zusammen, dass sich das Kulissenelement 130 in Vorschubrichtung 112 bewegt. Eine anschließende Bewegung des Kulissenelementes 130 in Radialrichtung 150 bewirkt ein Anliegen an einer zweiten Gleitführung 152, was der Bewegung weiteren Vorschub leistet. Die Anzahl der Bewegungszyklen bestimmt die Länge des in Vorschubrichtung 112 zurückgelegten Weges des Kulissenelementes 130. Diese Bewegungssequenz ist in den Figuren 9a-c dargestellt. Beginnt der Bewegungszyklus mit einer Bewegung des Kulissenelementes 130 in Radialrichtung 150, erfährt selbiges einen Vorschub entgegen der Vorschubrichtung 112, wie in den Figuren 9d-f dargestellt.

Der vorgeschlagene Antrieb kann insbesondere Verwendung in analogen Zeigerinstrumenten finden, deren Anzeige im Betrieb über lange Zeiten eine statische Zeigerposition annimmt. Aufgrund seiner kompakten Bauweise benötigt er einen geringen Bauraum und kann für Anzeigen mit geringer Dynamik, die keine hohen Anforderungen an die Auflösung der Analogwert-Anzeige stellen, zum Einsatz kommen.

## Patentansprüche

1. Inkrementeller Antrieb (2), insbesondere für ein analoges Zeigerinstrument (1) eines Kraftfahrzeuges, mit einer drehbaren Achse (4), wobei der Antrieb (2) einen elektromechanisch bewegten Kulissenantrieb aufweist, mittels dessen die Achse (4) angetrieben wird und sich so ein Kulissenelement (130) bewegt, das entlang einer Vorschubrichtung (112) bewegbar gelagert ist, wobei das Kulissenelement (130) beschränkt auf einen translatorischen Freiheitsgrad beweglich zwischen zwei Stellungen (141, 142) zusätzlich gelagert ist und sich zwischen einer ersten Stellung (141) und einer zweiten Stellung (142) hin und her bewegen kann, **dadurch gekennzeichnet, dass** zwischen der ersten Stellung (141) und der zweiten Stellung (142) des Kulissenelementes (130) eine neutrale Stellung (140) vorgesehen ist, so dass der inkrementelle Antrieb (2) in seiner Vorschubrichtung (112) umgekehrt werden kann.

2. Inkrementeller Antrieb (2) nach Anspruch 1, **dadurch gekennzeichnet, dass** an der Achse (4) ein Zeigemittel (6), z. B. in Form eines Zeigers, angeordnet ist.

3. Inkrementeller Antrieb (2) nach Anspruch 1 oder 2, **dadurch gekennzeichnet, dass** der Kulissenantrieb ein Kulissenrad (11) und eine Kulisse (13) aufweist.

4. Inkrementeller Antrieb (2) nach Anspruch 3, **dadurch gekennzeichnet, dass** das Kulissenrad (11) axial angeordnet ist.

5. Inkrementeller Antrieb (2) nach Anspruch 3 oder 4, **dadurch gekennzeichnet, dass** das Kulissenrad (11) zur elektromechanischen Bewegung mit einem Permanentmagneten (10) verbunden ist, welcher durch einen Elektromagneten (8) bewegbar ist.

6. Inkrementeller Antrieb (2) nach Anspruch 5, **dadurch gekennzeichnet, dass** der Permanentmagnet (10) mit einem elastischen Element (15) zusammenwirkt.

7. Inkrementeller Antrieb (2) nach Anspruch 5, **dadurch gekennzeichnet, dass** der Antrieb (2) axial ober- und unterhalb des Permanentmagneten (10) angeordnete elastische Elemente (15) aufweist, in die der Permanentmagnet (10) eingespannt ist.

8. Inkrementeller Antrieb (2) nach Anspruch 5 bis 7, **dadurch gekennzeichnet, dass** der Elektromagnet (8) und/oder der Permanentmagnet (10) axial angeordnet sind.

9. Inkrementeller Antrieb (2) nach Anspruch 7 oder 8, **dadurch gekennzeichnet, dass** in Abhängigkeit einer Stromrichtung eines dem Elektromagneten (8) zugeführten Stroms der Permanentmagnet (10) angezogen oder abgestoßen wird, die ober- und unterhalb des Permanentmagneten (10) angeordneten elastischen Elemente (15) jeweils gegenläufig entlastet und belastet werden und das Kulissenrad (11) in der Kulisse (13) ab- oder aufwärts bewegt wird, so dass die Achse (4) mit dem daran angeordnete Zeigermittel (6) in zwei Richtungen drehbar ist.

10. Inkrementeller Antrieb (2) nach einem der Ansprüche 1 bis 9, **dadurch gekennzeichnet, dass** der Antrieb (2) digital ansteuerbar ist.

11. Inkrementeller Antrieb (2) nach einem der Ansprüche 5 bis 10, **dadurch gekennzeichnet, dass** der Permanentmagnet (10) auf einer Ober- und Unterseite einen axial ausgerichteten Pol und Gegenpol aufweist, zur abstoßenden oder anziehenden Hubbewegung gegen den Elektromagneten (8).

12. Inkrementeller Antrieb (2) nach einem der Ansprüche 7 bis 11, **dadurch gekennzeichnet, dass** die elastischen Elemente (15) als Tellerfedern ausgebildet sind und in stromlosem Zustand des Elektromagneten (8) eine Neutralstellung des Permanentmagneten (10) bewirken, so dass eine axiale Ausrichtung des Zeigemittels (6) bewirkt ist.

13. Inkrementeller Antrieb (2) nach einem der Ansprüche 7 bis 12, **dadurch gekennzeichnet, dass** der Permanentmagnet (10) zwischen den elastischen Elementen (15) dergestalt eingespannt ist, dass eine durch eine Reibung verursachte Hemmung der Drehbewegung bewirkt ist.

14. Inkrementeller Antrieb (2) nach einem der Ansprüche 5 bis 13, **dadurch gekennzeichnet, dass** der Elektromagnet (8) einen Spulenkörper (9) mit Anschlussmitteln (14) zum Anschluss an eine Schaltungsanordnung einer Leiterplatte (3) aufweist und die Kulisse (13) als Teil des Spulenkörpers (9) ausgebildet ist.

15. Inkrementeller Antrieb (2) nach einem der Ansprüche 2 bis 14, **dadurch gekennzeichnet, dass** die Achslagerung des Zeigemittels (6) viskose Dämpfungsmittel aufweist, zur Dämpfung einer Schrittbewegung des Zeigemittels (6).

16. Inkrementeller Antrieb (2) nach einem der Ansprüche 1 bis 15, **dadurch gekennzeichnet, dass** die Achse (4) aus transparentem lichtleitenden Material hergestellt ist.

17. Inkrementeller Antrieb (2) nach einem der Ansprüche 1 bis 16, **dadurch gekennzeichnet**, das eine auf der Leiterplatte (3) angeordnete lichtemittierende Lichtquelle Licht in die Achse (4) einkoppelt, zur Beleuchtung eines axial angeordneten Zifferblattes (5).

18. Inkrementeller Antrieb (2) nach einem der Ansprüche 1 bis 15, **dadurch gekennzeichnet, dass** die Achse (4) aus ferromagnetischem Material hergestellt ist.

19. Inkrementeller Antrieb (2) nach einem der Ansprüche 1 bis 18, **dadurch gekennzeichnet, dass** im Permanentmagneten (10) eine Hülse angeordnet ist, die die Achse (4) umschließt und als Achslagerung dient.

20. Inkrementeller Antrieb (2) nach einem der Ansprüche 5 bis 19, **dadurch gekennzeichnet, dass** der Elektromagnet (8) von einer äußeren magnetisch leitenden Hülle umschlossen ist.

21. Inkrementeller Antrieb (2) nach einem der Ansprüche 14 bis 20, **dadurch gekennzeichnet, dass** die elastischen Elemente (15) aus Kunststoff hergestellt sind und einstückig mit dem Spulenkörper (9) ausgebildet sind.

22. Inkrementeller Antrieb (2) nach einem der Ansprüche 1 bis 21, **dadurch gekennzeichnet, dass** der Kulissenantrieb eine ortsfeste Führungskulisse (111) und das bewegliche Kulissenelement (130) aufweist, das Kulissenelement (130) mindestens ein Führungselement (123, 124) aufweist, welches Führungselement (123, 124) mit der Führungskulisse (111) zumindest zeitweise im Eingriff steht, wobei das Kulissenelement (130) mit einer Antriebskraft beaufschlagt wird, so dass sich das Kulissenelement (130) in Richtung der Antriebskraft bewegt und gleichzeitig die Führungskulisse (111) das Kulissenelement (130) mittels des Führungselements (123, 124) auf Grund der Bewegung in Richtung der Antriebskraft in eine Vorschubrichtung (112) führt.

23. Inkrementeller Antrieb (2) nach Anspruch 22, **dadurch gekennzeichnet, dass** die Führungskulisse (111) schräg zur Vorschubrichtung (112) orientierte Gleitführungen (151, 152) aufweist, die mit dem Führungselement (123, 124) zusammenwirken.

24. Inkrementeller Antrieb (2) nach Anspruch 23, **dadurch gekennzeichnet, dass** die Führungskulisse (111) einzelne erste Gleitführungen (151) und einzelne zweite Gleitführungen (152) aufweist.

25. Inkrementeller Antrieb (2) nach Anspruch 24, **dadurch gekennzeichnet, dass** die ersten Gleitführungen (151) mit der Vorschubrichtung (112) einen stumpfen Winkel zwischen 20° und 70° einschließen, die zweiten Gleitführungen (152) mit der Vorschubrichtung (112) einen stumpfen Winkel zwischen 20° und 70° einschließen und die ersten Gleitführungen (151) mit den zweiten Gleitführungen (152) einen stumpfen Winkel zwischen 20° und 70° einschließen.

26. Inkrementeller Antrieb (2) nach Anspruch 25, **dadurch gekennzeichnet, dass** sich erste (151) und zweite Gleitführungen (152) in Vorschubrichtung (112) einander abwechseln.

27. Inkrementeller Antrieb (2) nach Anspruch 26, **dadurch gekennzeichnet, dass** benachbarte erste und zweite Gleitführungen (151, 152) so angeordnet sind, dass sie in Vorschubrichtung (112) direkt aneinander angrenzend angeordnet sind oder jeweils einen Überlappungsbereich aufweisen.

28. Inkrementeller Antrieb (2) nach Anspruch 27, **dadurch gekennzeichnet, dass** die Gleitführungen (151, 152) im Wesentlichen eben sind.

29. Inkrementeller Antrieb (2) nach Anspruch 22, **dadurch gekennzeichnet, dass** das Kulissenelement (130) als Zeiger (106) eines Zeigerinstrumentes (101) ausgebildet ist.

30. Inkrementeller Antrieb (2) nach Anspruch 29, **dadurch gekennzeichnet, dass** sich die Führungskulisse (111) entlang eines Kreissegmentes erstreckt, das Kulissenelement (130) um eine in Richtung der Achse (4) verlaufende Drehachse (105) drehbar gelagert ist, der geometrische Mittelpunkt des Kreissegments Bestandteil der Drehachse (105) ist, Gleitführungen (151, 152) der Führungskulisse (111) schräg zur Umfangsrichtung orientiert sind und eine das Kulissenelement (130) bewegende Antriebskraft zur Drehachse (105) radial orientiert ist.

31. Inkrementeller Antrieb (2) nach Anspruch 30, **dadurch gekennzeichnet, dass** die das Kulissenelement (130) bewegende Antriebskraft elektromagnetisch erzeugt wird, wobei eine Antriebsanordnung (125) mindestens eine Spule (122) und mindestens einen Magneten, insbesondere Permanentmagneten (135), aufweist.

32. Inkrementeller Antrieb (2) nach Anspruch 22, **dadurch gekennzeichnet, dass** ein Übertragungselement (132) zwischen einer ersten Position (137) und einer zweiten Position (138) hin und her beweglich gelagert ist, das Übertragungselement (132) mit dem Kulissenelement (130) in der Weise zusammenwirkt, dass eine Bewegung des Übertragungselementes (132) in die erste Position (137) eine Bewegung des Kulissenelementes (130) in eine erste Stellung (141) bewirkt und ein Bewegen des Übertragungselementes (132) in die zweite Position (138) eine Bewegung des Kulissenelementes (130) in eine zweite Stellung (142) bewirkt.

33. Inkrementeller Antrieb (2) nach Anspruch 32, **dadurch gekennzeichnet, dass** das Übertragungselement (132) und das Kulissenelement (130) zwischen einer ersten Position (137) bzw. ersten Stellung (141), einer zweiten Position (138) bzw. zweiten Stellung (142), und einer zwischen der ersten (137) und zweiten Position (138) bzw. Stellung (142) befindlichen neutralen Position (136) bzw. neutralen Stellung (140) bewegbar sind.

34. Verfahren zum Betrieb eines inkrementellen Antriebs (2) nach Anspruch 32, **dadurch gekennzeichnet, dass** das Übertragungselement (132) die Antriebskraft auf das Kulissenelement (130) überträgt und dass das Kulissenelement (130) ein erstes und ein zweites Führungselement (123, 124) aufweist, wobei das erste Führungselement (123) mit der Führungskulisse (111) bei einer Bewegung des Übertragungselements (132) und des Kulissenelements (130) in die erste Position (137) bzw. erste Stellung (141) in Eingriff gerät und das zweite Führungselement (124) mit der Führungskulisse (111) bei einer Bewegung des Übertragungselements (132) und des Kulissenelements (130) in die zweite Position (138) bzw. zweite Stellung (142) in Eingriff gerät, wobei die Bewegung des Übertragungselements (132) und des Kulissenelements (130) in die erste Position (137) bzw. erste Stellung (141) eine Bewegung des Antriebs in die Vorschubrichtung (112) und die Bewegung des Übertragungselements (132) und des Kulissenelements (130) in die zweite Position (138) bzw. zweite Stellung (142) eine Bewegung des Antriebs entgegen der Vorschubrichtung (112) bewirkt.

35. Inkrementeller Antrieb (2) nach Ansprüchen 31 und 33, **dadurch gekennzeichnet, dass** ein Übertragungselement (132) mit einem Magneten, insbesondere einem Permanentmagneten (135), in fester Verbindung steht, welcher in eine die Antriebskraft erzeugende Wechselwirkung mit der Spule (122) tritt, wenn die Spule (122) mit einer Ansteuerspannung beaufschlagt wird.

36. Zeigerinstrument (101) mit einem Zeiger (106) und einem mit dem Zeiger (106) verbundenen inkrementellen Antrieb (2) gemäß mindestens einem der vorhergehenden Ansprüche.

## Claims

1. Incremental drive (2), in particular for an analog indicator instrument (1) of a motor vehicle, with a rotatable shaft (4), wherein the drive (2) has an electromechanically moved sliding gate drive, which is used to drive the shaft (4) and thus a sliding gate element (130), which is mounted so as to be moved in an advancement direction (112) moves in such a manner, wherein the sliding gate element (130) is additionally mounted between two settings (141, 142) so as to be moveable limited to a translatory degree of freedom and is capable of being moved between a first setting (141) and a second setting (142),
**characterized in that** a neutral setting (140) is provided between the first setting (141) and the second setting (142) of the sliding gate element (130) so that the advancement direction (112) of Incremental drive (2) can be reversed.

2. Incremental drive (2) according to Claim 1,
**characterized in that** a pointing means (6), e.g. in the form of a pointer, is arranged on the shaft (4).

3. Incremental drive (2) according to Claim 1 or 2,
**characterized in that** the sliding gate drive has a gate gear (11) and a sliding gate (13).

4. Incremental drive (2) according to Claim 3,
**characterized in that** the gate gear (11) is arranged axially.

5. Incremental drive (2) according to Claim 3 or 4,
**characterized in that**, for the purpose of an electromechanical movement, the gate gear (11) is connected to a permanent magnet (10), which can be moved by an electromagnet (8).

6. Incremental drive (2) according to Claim 5,
**characterized in that** the permanent magnet (10) interacts with an elastic element (15).

7. Incremental drive (2) according to Claim 5,
**characterized in that** the drive (2) has elastic elements (15), which are arranged axially above and below the permanent magnet (10), and into which the permanent magnet (10) is clamped.

8. Incremental drive (2) according to Claim 5 to 7,
**characterized in that** the electromagnet (8) and/or the permanent magnet (10) are arranged axially.

9. Incremental drive (2) according to Claim 7 or 8,
**characterized in that** the permanent magnet (10) is attracted or repelled as a function of a direction of a current supplied to the electromagnet (8), the elastic elements (15) arranged above and below the permanent magnet (10) are each relieved of stress and stressed in the opposite direction and the gate gear (11) is moved up or down in the sliding gate (13) so that the shaft (4) can be pivoted in two directions by means of the pointing means (6) arranged thereon.

10. Incremental drive (2) according to one of Claims 1 to 9,
**characterized in that** the drive (2) can be driven digitally.

11. Incremental drive (2) according to one of Claims 5 to 10,
**characterized in that** the permanent magnet (10) has, on an upper and lower side, an axially aligned pole and antipole for a repelling or attracting lifting movement against the electromagnet (8).

12. Incremental drive (2) according to one of Claims 7 to 11,
**characterized in that** the elastic elements (15) are configured as disc springs and, in a currentless state of the electromagnet (8), bring about a neutral setting of the permanent magnet (10), thus bringing about an axial alignment of the pointing means (6).

13. Incremental drive (2) according to one of Claims 7 to 12,
**characterized in that** the permanent magnet (10) is clamped between the elastic elements (15) in such a manner that blocking of the rotation is effected by means of a friction.

14. Incremental drive (2) according to one of Claims 5 to 13,
**characterized in that** the electromagnet (8) has a coil body (9) with connecting means (14) for connection to a circuit configuration of a printed circuit board (3) and the sliding gate (13) is configured as part of the coil body (9).

15. Incremental drive (2) according to one of Claims 2 to 14,
**characterized in that** the shaft bearing of the pointing means (6) has viscous damping means for damping a stepwise movement of the pointing means (6).

16. Incremental drive (2) according to one of Claims 1 to 15,
**characterized in that** the shaft (4) is made of transparent light-guiding material.

17. Incremental drive (2) according to one of Claims 1 to 16,
**characterized in that** a light-emitting light source arranged on the printed circuit board (3) injects light into the shaft (4) in order to illuminate an axially arranged dial (5).

18. Incremental drive (2) according to one of Claims 1 to 15,
**characterized in that** the shaft (4) is made of ferromagnetic material.

19. Incremental drive (2) according to one of claims 1 to 18,
**characterized in that** a sleeve, which surrounds the shaft (4) and serves as a shaft bearing, is arranged in the permanent magnet (10).

20. Incremental drive (2) according to one of Claims 5 to 19,
**characterized in that** the electromagnet (8) is surrounded by an outer magnetically permeable shell.

21. Incremental drive (2) according to one of Claims 14 to 20,
**characterized in that** the elastic elements (15) are manufactured of a plastic material and configured in one piece with the coil body (9).

22. Incremental drive (2) according to one of Claims 1 to 21,
**characterized in that** the sliding gate drive has a fixed guide sliding gate (111) and the moveable sliding gate element (130) has at least one guide element (123, 124), said guide element (123, 124) being in at least temporary engagement with the guide sliding gate (111), wherein the sliding gate element (130) is impinged upon by a drive force so that the sliding gate element (130) moves in the direction of the drive force and, at the same time, the guide sliding gate (111) guides the sliding gate element (130) by means of the guide element (123, 124) in an advancement direction (112) due to the movement in the direction of the drive force.

23. Incremental drive (2) according to Claim 22,
**characterized in that** the guide sliding gate (111) has sliding guides (151, 152), which interact with the guide element (123, 124) and which are oriented at an oblique angle to the advancement direction (112).

24. Incremental drive (2) according to Claim 23,
**characterized in that** the guide sliding gate (111) has individual first sliding guides (151) and individual second sliding guides (152).

25. Incremental drive (2) according to Claim 24,
**characterized in that** the first sliding guides (151) form an obtuse angle between 20° and 70° with the advancement direction (112), the second sliding guides (152) form an obtuse angle between 20° and 70° with the advancement direction (112), and the first sliding guides (151) form an obtuse angle between 20° and 70° with the second sliding guides (152).

26. Incremental drive (2) according to Claim 25,
**characterized in that** first (151) and second sliding guides (152) alternate in the advancement direction (112).

27. Incremental drive (2) according to Claim 26,
**characterized in that** adjacent first and second sliding guides (151, 152) are arranged in such a manner that they are arranged so as to directly abut one another or so as to each have an overlapping region.

28. Incremental drive (2) according to Claim 27,
**characterized in that** the sliding guides (151, 152) are substantially level.

29. Incremental drive (2) according to Claim 22,
**characterized in that** the sliding gate element (130) is configured as a pointer (106) of an indicator instrument (101).

30. Incremental drive (2) according to Claim 29,
**characterized in that** the guide sliding gate (111) extends along a segment of a circle, the sliding gate element (130) is mounted so as to be rotatable about an axis of rotation (105), which extends in the direction of the shaft (4), the geometric center of the segment of the circle is a component of the axis of rotation (105), sliding guides (151, 152) of the guide sliding gate (111) are oriented at an oblique angle to the circumferential direction, and a drive force, which moves the sliding gate element (130) is oriented radially to the axis of rotation (105).

31. Incremental drive (2) according to Claim 30,
**characterized in that** the drive force, which moves the sliding gate element (130), is generated electromagnetically, wherein a drive arrangement (125) has at least one coil (122) and at least one magnet, in particular a permanent magnet (135).

32. Incremental drive (2) according to Claim 22,
**characterized in that** a transfer element (132) is mounted between a first position (137) and a second position (138) so as to be capable of being moved back and forth, the transfer element (132) interacts with the sliding gate element (130) in such a manner that a movement of the transfer element (132) into the first position (137) brings about a movement of the sliding gate element (130) into a first setting (141), and a movement of the transfer element (132) into the second position (138) brings about a movement of the sliding gate element (130) into a second setting (142).

33. Incremental drive (2) according to Claim 32,
**characterized in that** the transfer element (132) and the sliding gate element (130) can be moved between a first position (137) or a first setting (141), between a second position (138) or a second setting (142), and between a neutral position (136) or a neutral setting (140) located between the first position (137) and the second position (138) or setting (142).

34. Method for operating an incremental drive (2) according to Claim 32,
**characterized in that** the transfer element (132) transfers the drive force to the sliding gate element (130), and that the sliding gate element (130) has a first and a second guide element (123, 124), wherein the first guide element (123) comes into engagement with the guide sliding gate (111) when there is a movement of the transfer element (132) and of the sliding gate element (130) into the first position (137) or the first setting (141) and the second guide element (124) comes into engagement with the guide sliding gate (111) when there is a movement of the transfer element (132) and of the sliding gate element (130) into the second position (138) or into the second setting (142), wherein the movement of the transfer element (132) and of the sliding gate element (130) into the first position (137) or into the first setting (141) brings about a movement of the drive in the advancement direction (112) and the movement of the transfer element (132) and of the sliding gate element (130) into the second position (138) or into the second setting (142) brings about a movement of the drive in the opposite direction to the advancement direction (112).

35. Incremental drive (2) according to Claims 31 and 33,
**characterized in that** a transfer element (132) is in a fixed connection with a magnet, in particular a permanent magnet (135), which enters into interaction with the coil (122), said interaction creating the drive force, if the coil (122) is impinged upon by a drive voltage.

36. Indicator instrument (101) with a pointer (106) and with an incremental drive (2), which is connected to the pointer (106), according to at least one of the preceding claims.

## Revendications

1. Commande incrémentale (2), destinée, notamment, à un instrument analogique à aiguille (1) d'un véhicule automobile, comportant un axe rotatif (4), où la commande (2) comporte un entraînement à coulisse à commande électromécanique, au moyen duquel l'axe (4) est entraîné et, ainsi, un organe coulissant (130), qui est suspendu mobile le long d'une direction d'avance (112), se déplace, l'élément coulissant (130) étant en supplément suspendu mobile entre deux états (141, 142) avec une restriction à un degré de liberté en translation et pouvant se déplacer par va-et-vient entre un premier état (141) et un deuxième état (142), **caractérisée par le fait que**, entre le premier état (141) et le deuxième état (142) de l'organe coulissant (130), il est prévu un état neutre (140) si bien que la direction de l'avance de la commande incrémentale (2) peut être inversée.

2. Commande incrémentale (2) selon la revendication 1, **caractérisée par le fait qu'**un moyen de pointage (6), par exemple, sous la forme d'une aiguille, est monté sur l'axe (4).

3. Commande incrémentale (2) selon la revendication 1 ou 2, **caractérisée par le fait que** l'entraînement à coulisse comporte un pignon de coulisse (11) et une coulisse (13).

4. Commande incrémentale (2) selon la revendication 3, **caractérisée par le fait que** le pignon de coulisse (11) est monté dans le sens axial.

5. Commande incrémentale (2) selon la revendication 3 ou 4, **caractérisée par le fait que** le pignon de coulisse (11) est lié, pour son déplacement électromécanique, à un aimant permanent (10) qui peut se déplacer sous l'effet d'un électroaimant (8).

6. Commande incrémentale (2) selon la revendication 5, **caractérisée par le fait que** l'aimant permanent (10) concoure avec un élément élastique (15).

7. Commande incrémentale (2) selon la revendication 5, **caractérisée par le fait que** la commande comporte des éléments élastiques (15) placés dans le sens axial au-dessus et au-dessous de l'aimant permanent (10), l'aimant permanent (10) étant serré dans lesdits éléments élastiques.

8. Commande incrémentale (2) selon la revendication 5 à 7, **caractérisée par le fait que** l'électroaimant (8) et / ou l'aimant permanent (10) sont placés dans le sens axial.

9. Commande incrémentale (2) selon la revendication 7 ou 8, **caractérisée par le fait que**, en fonction de la direction d'un courant appliqué à l'électroaimant (8), l'aimant permanent (10) est attiré ou repoussé, les éléments élastiques (15) placés au-dessus et au-dessous de l'aimant permanent (10) sont, chacun à l'inverse l'un de l'autre, soulagés ou soumis à un effort et le pignon de coulisse (11) se déplace dans la coulisse (13) vers le bas ou vers le haut, si bien que l'axe (4) peut tourner dans deux directions avec le moyen de pointage (6) qui y est fixé.

10. Commande incrémentale (2) selon l'une des revendications 1 à 9, **caractérisée par le fait que** la commande (2) peut être excitée numériquement.

11. Commande incrémentale (2) selon l'une des revendications 5 à 10, **caractérisée par le fait que** l'aimant permanent (10) comporte, sur une face supérieure et sur une face inférieure, un pôle et un antipôle orientés dans le sens axial, destinés à assurer un mouvement d'excursion de repoussement ou d'attraction par rapport à l'électroaimant (8).

12. Commande incrémentale (2) selon l'une des revendications 7 à 11, **caractérisée par le fait que** les éléments élastiques (15) sont conçus sous la forme de rondelles Belleville et assurent, dans l'état sans courant de l'électroaimant (8), un état neutre de l'aimant permanent (10), si bien qu'on obtient une orientation axiale du moyen de pointage (6).

13. Commande incrémentale (2) selon l'une des revendications 7 à 12, **caractérisée par le fait que** l'aimant permanent (10) est serré entre les éléments élastiques (15) de manière telle qu'on obtient un freinage du mouvement de rotation provoqué par une friction.

14. Commande incrémentale (2) selon l'une des revendications 5 à 13, **caractérisée par le fait que** l'électroaimant (8) comporte une armature (9) de bobine de champ avec des moyens de raccordement (14) pour la raccorder à un circuit d'une carte à circuits imprimés (3) et que la coulisse (13) est conçue comme partie de l'armature (9) de bobine de champ.

15. Commande incrémentale (2) selon l'une des revendications 2 à 14, **caractérisée par le fait que** la suspension de l'axe du moyen de pointage (6) comporte des moyens d'amortissement visqueux permettant d'amortir un mouvement pas-à-pas du moyen de pointage (6).

16. Commande incrémentale (2) selon l'une des revendications 1 à 15, **caractérisée par le fait que** l'axe (4) est fabriqué en matière transparente conduisant la lumière.

17. Commande incrémentale (2) selon l'une des revendications 1 à 16, **caractérisée par le fait qu'**une source lumineuse placée sur la carte à circuits imprimés (3) couple dans l'axe (4) de la lumière destinée à éclairer un cadran (5) placé dans le sens axial.

18. Commande incrémentale (2) selon l'une des revendications 1 à 15, **caractérisée par le fait que** l'axe (4) est fabriqué en matière ferromagnétique.

19. Commande incrémentale (2) selon l'une des revendications 1 à 18, **caractérisée par le fait qu'**une douille est placée dans l'aimant permanent (10), ladite douille entourant l'axe (4) et servant de palier à l'axe.

20. Commande incrémentale (2) selon l'une des revendications 5 à 19, **caractérisée par le fait que** l'électroaimant (8) est entouré d'une enveloppe extérieure à conduction magnétique.

21. Commande incrémentale (2) selon l'une des revendications 14 à 20, **caractérisée par le fait que** les éléments élastiques (15) sont fabriqués en matière plastique et sont conçus pour former une pièce unique avec l'armature (9) de bobine de champ.

22. Commande incrémentale (2) selon l'une des revendications 1 à 21, **caractérisée par le fait que** l'entraînement à coulisse comporte une coulisse de guidage (111) fixe et l'organe coulissant mobile (130), que l'organe coulissant (130) comporte au moins un élément guide (123, 124), ledit élément guide (123, 124) étant au moins temporairement en prise avec la coulisse de guidage (111), l'organe coulissant (130) étant alors soumis à une force d'entraînement, si bien que l'organe coulissant (130) se déplace dans la direction de la force d'entraînement et, en même temps, la coulisse de guidage (111) guide l'organe coulissant (130) dans une direction d'avance (112) au moyen de l'élément guide (123, 124) en raison du déplacement dans la direction de la force d'entraînement.

23. Commande incrémentale (2) selon la revendication 22, **caractérisée par le fait que** la coulisse de guidage (111) comporte des glissières (151, 152) orientées obliquement par rapport à la direction de l'avance (112), lesdites glissières concourant avec l'élément guide (123, 124).

24. Commande incrémentale (2) selon la revendication 23, **caractérisée par le fait que** la coulisse de guidage (111) comporte des premières glissières (151) indépendantes et des deuxièmes glissières (152) indépendantes.

25. Commande incrémentale (2) selon la revendication 24, **caractérisée par le fait que** les premières glissières (151) forment avec la direction de l'avance (112) un angle obtus compris entre 20° et 70°, que les deuxièmes glissières (152) forment avec la direction de l'avance (112) un angle obtus compris entre 20° et 70° et que les premières glissières (151) forment avec les deuxièmes glissières (152) un angle obtus compris entre 20° et 70°.

26. Commande incrémentale (2) selon la revendication 25, car a c t é r i s é e par le fait que des premières glissières (151) alternent avec des deuxièmes glissières (152) dans la direction de l'avance (112).

27. Commande incrémentale (2) selon la revendication 26, **caractérisée par le fait que** des premières et des deuxièmes glissières (151, 152) voisines sont disposées de manière telle qu'elles sont placées, dans la direction de l'avance (112), directement adjacentes l'une à l'autre ou qu'elles ont une zone de chevauchement.

28. Commande incrémentale (2) selon la revendication 27, **caractérisée par le fait que** les glissières (151, 152) sont, pour l'essentiel, planes.

29. Commande incrémentale (2) selon la revendication 22, **caractérisée par le fait que** l'organe coulissant (130) est conçu comme pointeur (106) d'un instrument à aiguille (101).

30. Commande incrémentale (2) selon la revendication 29, **caractérisée par le fait que** la coulisse de guidage (111) s'étend le long d'un segment de cercle, que l'organe coulissant (130) est suspendu en rotation autour d'un axe de rotation (105) se trouvant dans la direction de l'axe (4), que le centre géométrique du segment de cercle se trouve sur l'axe de rotation (105), que des glissières (151, 152) de la coulisse de guidage (111) sont orientées obliquement par rapport à la direction de la circonférence et qu'une force d'entraînement déplaçant l'organe coulissant (130) est orientée radialement par rapport à l'axe de rotation (105).

31. Commande incrémentale (2) selon la revendication 30, **caractérisée par le fait que** la force d'entraînement déplaçant l'organe coulissant (130) est générée par effet électromagnétique, un dispositif d'entraînement (125) comportant au moins une bobine (122) et au moins un aimant, notamment, un aimant permanent (135).

32. Commande incrémentale (2) selon la revendication 22, **caractérisée par le fait qu'**un organe de transmission (132) est suspendu mobile par va-et-vient entre une première position (137) et une deuxième position (138), que l'organe de transmission (132) concoure avec l'organe coulissant (130) de manière telle qu'un déplacement de l'organe de transmission (132) dans la première position (137) provoque un déplacement de l'organe coulissant (130) dans un premier état (141) et un déplacement de l'organe de transmission (132) dans la deuxième position (138) provoque un déplacement de l'organe coulissant (130) dans un deuxième état (142).

33. Commande incrémentale (2) selon la revendication 32, **caractérisée par le fait que** l'organe de transmission (132) est mobile entre une première position (137), une deuxième position (138) et une position neutre (136) se trouvant entre la première position (137) et la deuxième position (138) et, respectivement, l'organe coulissant (130) est mobile entre un premier état (141), un deuxième état (142) et un état neutre (140) se trouvant entre le premier état (141) et le deuxième état (142).

34. Commande incrémentale (2) selon la revendication 32, **caractérisée par le fait que** l'organe de transmission (132) transmet la force d'entraînement à l'organe coulissant (130) et que l'organe coulissant (130) comporte un premier et un deuxième élément guide (123, 124), le premier élément guide (123) entrant en prise avec la coulisse de guidage (111) lors d'un déplacement de l'organe de transmission (132) dans la première position (137) et, respectivement, de l'organe coulissant (130) dans le premier état (141) et le deuxième élément guide (124) entrant en prise avec la coulisse de guidage (111) lors d'un déplacement de l'organe de transmission (132) dans la deuxième position (138) et, respectivement, de l'organe coulissant (130) dans le deuxième état (142), le déplacement de l'organe de transmission (132) dans la première position (137) et, respectivement, le déplacement de l'organe coulissant (130) dans le premier état (141) provoquant un mouvement de la commande dans la direction de l'avance (112) et le déplacement de l'organe de transmission (132) dans la deuxième position (138) et, respectivement, le déplacement de l'organe coulissant (130) dans le deuxième état (142) provoquant un mouvement de la commande dans le sens opposé à la direction de l'avance (112).

35. Commande incrémentale (2) selon les revendications 31 et 33, **caractérisée par le fait qu'**un organe de transmission (132) est en liaison ferme avec un aimant, notamment, avec un aimant permanent (135), lequel entre en interaction produisant la force d'entraînement avec la bobine (122), lorsque la bobine (122) est soumise à une tension de commande.

36. Instrument à aiguille (101) comportant un pointeur (106) et une commande incrémentale (2) liée au pointeur (106), conforme à au moins l'une des revendications précédentes.
